# EUROPEAN PATENT SPECIFICATION

(11) **EP 2 453 348 B1**
(45) Date of publication and mention of the grant of the patent: **17.07.2019**
(21) Application number: 11008559.4
(22) Date of filing: 25.10.2011
(51) Int. Cl.: G06F 3/12

(54) **Image forming system, image forming method, server, and image forming apparatus**
Bilderzeugungssystem, Bilderzeugungsverfahren, Server und Bilderzeugungsvorrichtung
Système de formation d'images, procédé de formation d'image, serveur et appareil de formation d'images

(30) Priority: 11.11.2010 JP 2010252955
(43) Date of publication of application: 16.05.2012
(73) Proprietor: Canon Kabushiki Kaisha, Tokyo (JP)
(72) Inventor: Sato, Tetsuya, Tokyo (JP)
(74) Representative: WESER & Kollegen

(56) References cited:
- EP-A1- 1 621 994
- JP-A- 2007 030 354
- US-A1- 2002 097 428
- US-A1- 2007 146 778

## Description

### BACKGROUND OF THE INVENTION

### Field of the Invention

The present invention relates to an image forming system and image forming apparatus for forming an image by receiving data from a server or the like, and a control method for the image forming system and image forming apparatus.

### Description of the Related Art

In recent years, there has been provided a service which enables the accumulation of print data on a server on the Internet and acquires the print data in the server to pull-print it from an image forming apparatus such as an MFP (Multi Function Peripheral). The print data means data containing image data and a job script or job ticket in which print settings are described. Such a cloud service has an advantage that an MFP for printing is not particularly limited. The user can instruct print processing using an arbitrary MFP connected to the Internet.

Since, however, the user instructs print processing using an arbitrary image forming apparatus, he/she may notice, after the print processing starts, that the throughput of the image forming apparatus which has received the print instruction is low or the instructed print processing involves a large amount of data. In this case, since it takes a time longer than the time expected to print data, the load of monitoring the processing on the user increases or the image forming apparatus is occupied, thereby imposing a significant burden on the user.

There has been conventionally proposed a technique in which if it takes a long time for one image forming apparatus to execute processing, the user is presented in advance before the processing starts a mode in that a plurality of apparatuses execute processing (see, for example, Japanese Patent Laid-Open No. 2001-298565). In Japanese Patent Laid-Open No. 2001-298565, if the user selects the mode in that a plurality of apparatuses execute processing, a plurality of image forming apparatuses perform the processing in parallel, thereby shortening the processing time. Furthermore, in another conventional technique, the UI of a certain image forming apparatus displays the statuses of jobs including those of other image forming apparatuses by calculating the number of remaining copies and the remaining processing time (see, for example, Japanese Patent No. 4270046). In Japanese Patent No. 4270046, since the statuses of jobs which are being processed in cooperation with other image forming apparatuses are displayed, the user can check the remaining time and the like.

Both the above-described conventional techniques, however, have problems. In Japanese Patent Laid-Open No. 2001-298565, before print processing starts, the user has to determine whether to execute the print processing using a plurality of apparatuses. Furthermore, if the user determines to execute the processing using a plurality of apparatuses, he/she has to determine image forming apparatuses to execute parallel processing, and then send an instruction. Once the print processing starts, it progresses according to the instruction given before it starts. Therefore, even if the user notices that the print processing is slow after it starts, it is impossible to execute parallel processing with other image forming apparatuses during the processing. Moreover, in Japanese Patent No. 4270046, although it is possible to check the statuses of jobs including those of other image forming apparatuses, it is impossible to start parallel processing in the middle of processing.

See for further reference also EP 1 621 994 which discloses that a non-default printer receives a selected job from a default printer and prints the received job. The selected job has been selected by a user via a Ul of the non-default printer from a list based on information of jobs searched from a memory of the default printer. And US 2002/0097428 discloses breaking down a spooled job into sub-jobs and transmitting the sub-jobs to a printer. US 2007/146778 discloses mailbox printing of print jobs divided on the server.

### SUMMARY OF THE INVENTION

The present invention has been made in consideration of the above situation, and provides an image forming apparatus which enables designation of parallel processing and image forming apparatuses to execute parallel processing after print processing starts even though the user does not designate to execute parallel print processing or does not designate image forming apparatuses to execute parallel processing before print processing starts, and a control method for the image forming apparatus.

The present invention in its first aspect provides an image forming apparatus as specified in claims 1 to 4.

The present invention in its second aspect provides a method as specified in claim 5.

The present invention in its third aspect provides a program as specified in claim 6.

According to the present invention, the user can instruct to start parallel printing in an arbitrary image forming apparatus after print processing starts by dividing print data in advance according to contents of the print processing.

Further features of the present invention will become apparent from the following description of exemplary examples with reference to the attached drawings.

### BRIEF DESCRIPTION OF THE DRAWINGS

Fig. 1 is a view showing the overall configuration of an image forming system according to an example of the present invention;
Fig. 2 is a block diagram showing the hardware configuration of an MFP according to the example of the present invention;
Fig. 3 is a block diagram showing the hardware configuration of a server according to the example of the present invention;
Fig. 4 is a block diagram showing the software configuration of the MFP according to the example of the present invention;
Fig. 5 is a block diagram showing the software configuration of the server according to the example of the present invention;
Figs. 6A and 6B are views each showing a list managed by the server according to the example of the present invention;
Fig. 7 is a first sequence chart showing communication processing between an MFP 110 and the server according to the example of the present invention;
Figs. 8A and 8B are views each showing a pull print setting screen of each MFP according to the example of the present invention;
Fig. 9 is a flowchart illustrating division determination processing of a server 130 according to the example of the present invention;
Figs. 10A and 10B are views showing job scripts before and after division processing according to the example of the present invention;
Fig. 11 is a view showing a screen of the MFP 110, which indicates that printing is in progress, according to the example of the present invention;
Fig. 12 is a flowchart illustrating print end determination processing of the server according to the example of the present invention;
Fig. 13 is a second sequence chart showing communication processing between the MFP 110 and the server according to the example of the present invention;
Fig. 14 is a view showing a status list managed by the server according to the example of the present invention;
Fig. 15 is a sequence chart showing communication processing between an MFP 120 and a server according to the first example of the present invention; and
Fig. 16 is a sequence chart showing communication processing between an MFP 120 and a server according to the second example of the present invention.

### DESCRIPTION OF THE EMBODIMENTS

Best modes for carrying out the present invention will be described below with reference to the accompanying drawings.

### [First Example]

The first example of the present invention will be explained first. The first example shows an example of an image forming system in which after an MFP exemplifying an image forming apparatus starts pull print in response to an instruction from the user, another MFP parallelly executes pull print in response to an instruction from the same user. Pull print indicates a printing method in which a printer primarily acquires print data in a PDH format or the like by requesting the data of an external storage, and then prints it on its own.

### <System Configuration>

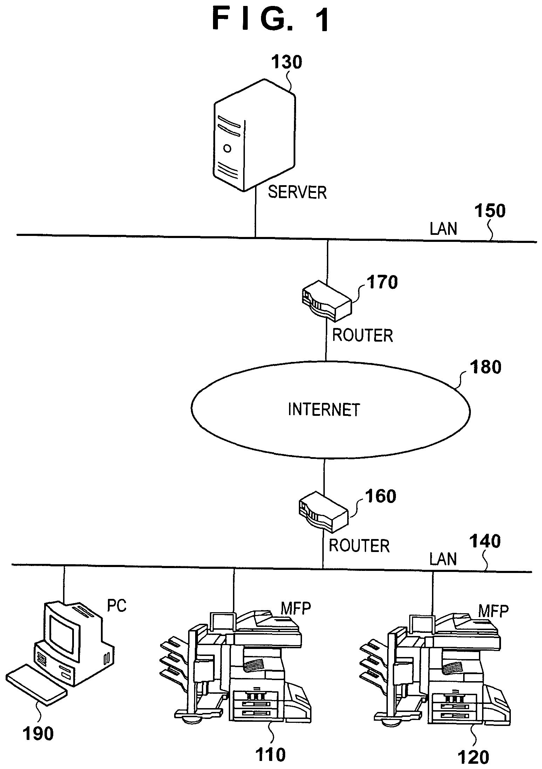

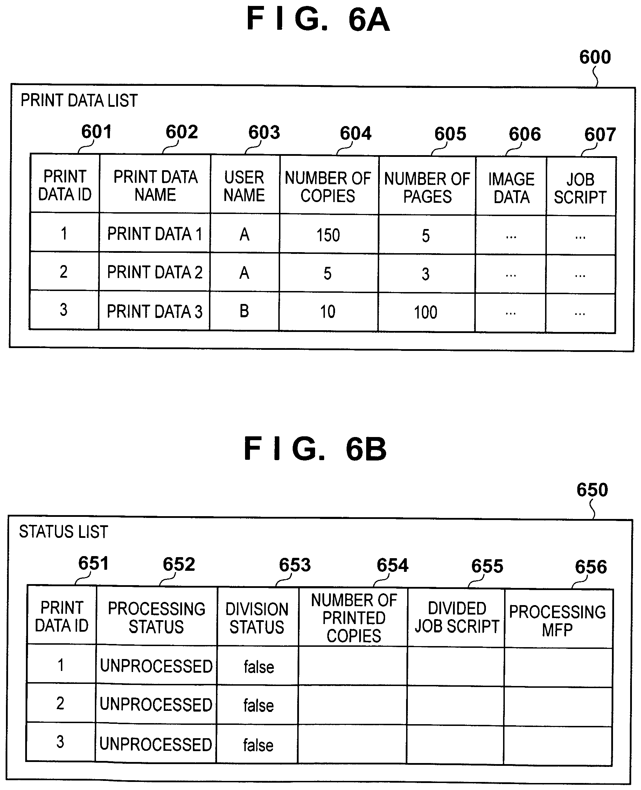

Fig. 1 is a view showing the overall configuration of a system to which the present invention is applicable. As shown in Fig. 1, MFPs 110 and 120 and a PC 190 are connected to a LAN 140 including Ethernet®. Each of the MFPs 110 and 120 has a print function and copy function. In addition, each MFP has a data transmission function of reading an original image and transmitting the thus obtained image data to a designated apparatus on the LAN 140 using an FTP protocol, an SMB protocol, or the like. Each MFP also has a function of receiving print data from an apparatus designated via the Internet 180, such as a server 130. Note that, in this example, if it is unnecessary to discriminate between the MFPs 110 and 120, "MFP" is simply used. In this example assume that print data indicates a set of items of a print data list 600 shown in Fig. 6A (to be described later) and corresponding image data. Thus, when print data is uploaded, one print data forms one print job. Note that a print job represents a unit of print processing. A print job for printing certain print data will be described as a print job associated with the print data. A print job is defined by data as the job script (to be described later) of the print job, and the job script is considered as a print job in this example. For example, transmission of a job script will also be described as transmission of a print job; holding of a job script, holding of a print job; and delete of a job script, delete of a print job.

The PC 190 can upload print data to the server 130 via the Internet 180 in response to an instruction from the user. A router 160 is arranged between the Internet 180 and the LAN 140, and a router 170 is arranged between the Internet 180 and a LAN 150. The server 130 is connected with the LAN 150. Note that the configuration of the MFPs, server, and PC is not limited to that in Fig. 1. For each of the components, one or a plurality of components may be arranged. Furthermore, the server 130 may bypass the Internet 180 to connect with the LAN 140, and the MFPs 110 and 120, server 130, and PC 190 may respectively connect with different LANs.

### <Hardware Configuration of MFP>

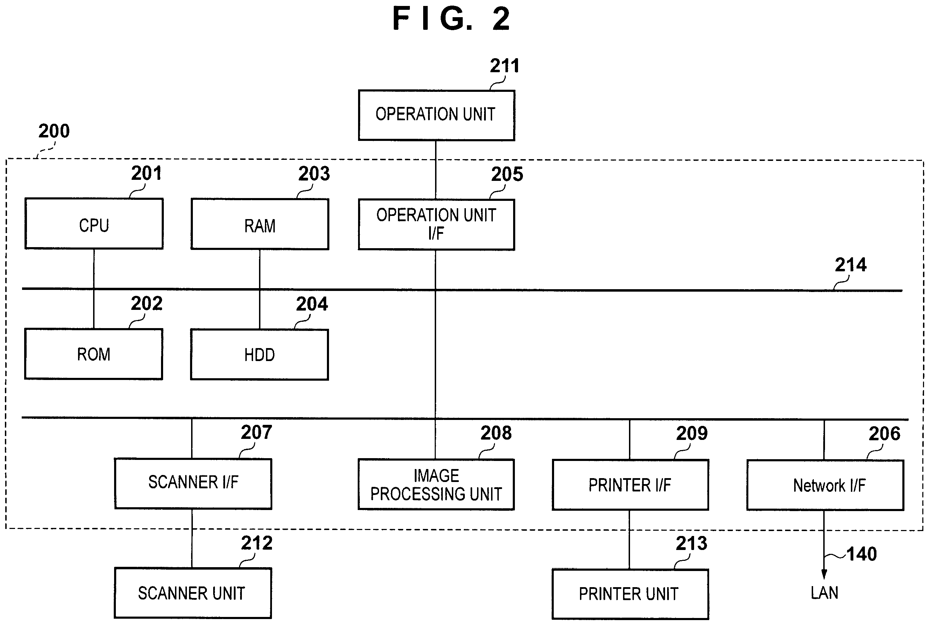

The MFPs 110 and 120 have the same hardware configuration, which includes the following components as shown in Fig. 2. That is, the configuration includes a scanner unit 212 serving as an image input device, a printer unit 213 serving as an image output device, a controller 200 for controlling the MFP, and an operation unit 211.

The scanner unit 212 serves as a device for reading an image on a document to generate image data. Note that documents are set on a document feeder and the controller 200 sends a document read instruction to the scanner unit 212. Upon receiving the instruction, the scanner unit 212 feeds the documents one by one from the document feeder, and executes a document read operation. Note that a method of scanning a document by placing the document on a glass surface (not shown) and moving an exposure unit may be used as a document read method instead of an automatic feed method using the document feeder.

The printer unit 213 serves as an image forming device which forms an image on a paper sheet based on image data received from the controller 200. Note that in this example, in addition to an electrophotographic method using a photosensitive drum or photosensitive belt, an ink-jet method is also applicable as an image forming method.

The controller 200 is electrically connected to the operation unit 211, scanner unit 212, and printer unit 213, as well as to the LAN 140 via a network interface 206. That is, the controller 200 is connected to other devices via the LAN 140. This allows communication according to the HTTP protocol.

A CPU 201 centrally controls access to various connected devices and access from other devices based on a control program and the like stored in a ROM 202. In addition, the CPU 201 centrally controls various processes executed within the controller 200. This control processing includes execution of programs for implementing flowcharts (to be described later).

The ROM 202 stores the boot program of the apparatus. A RAM 203 serves as a system work memory for operation of the CPU 201, and also as a memory for temporarily storing image data. The RAM 203 includes an area which holds contents stored as a backup or the like even after powering off the apparatus main body, and an area which erases stored contents after power off. A program is loaded into the latter area, and executed by the CPU 201.

An HDD 204 is a hard disk drive, which can store system software (programs and data) and image data.

An operation unit I/F 205 serves as an interface unit for connecting a system bus 214 and the operation unit 211. The operation unit I/F 205 receives image data for display on the operation unit 211 from the system bus 214, and outputs it to the operation unit 211 while outputting, to the system bus 214, information input through the operation unit 211. The operation unit 211 includes a touch panel and a keyboard, and is used to instruct a copy or print operation such as pull print operation, and to display a print status. Furthermore, the user can use the operation unit 211 to give an additional instruction of parallel processing and the like according to this example.

The network I/F 206 is connected to the LAN 140 and the system bus 214 to input/output information. A scanner I/F 207 corrects, processes, and edits image data received from the scanner unit 212. The scanner I/F 207 has a function of determining the type of received image data, that is, a color document or monochrome document, or a text document or photographic document. An image processing unit 208, for example, changes the orientation of image data and compresses/decompresses an image. The image processing unit 208 can also composite images saved in the HDD 204 to generate one image. A printer I/F 209 receives image data sent from the image processing unit 208, and performs image forming processing for the image data with reference to print settings added to the image data. The printer I/F 209 then outputs the image data undergone the image forming processing to the printer unit 213.

Note that in this example, the MFP is a network MFP which displays a UI. The MFP, however, may be another image forming apparatus having a print function, such as a general-purpose computer connected with a general-purpose printer, and the like.

### <Hardware Configuration of Server 130>

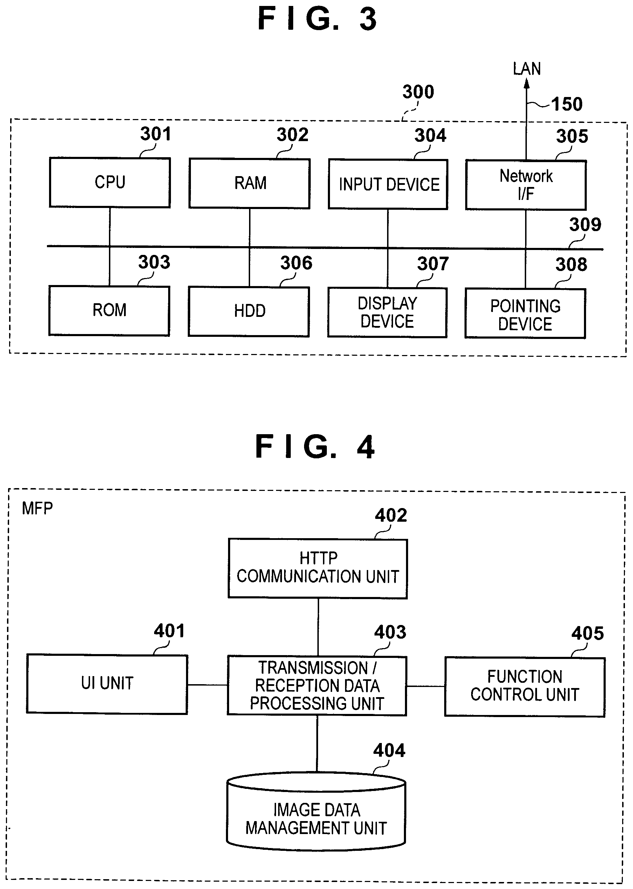

Fig. 3 is a block diagram showing a hardware configuration 300 of the server 130 shown in Fig. 1. Referring to Fig. 3, a CPU 301, RAM 302, ROM 303, network I/F 305, and hard disk drive (HDD) 306 are communicably connected with each other via a system bus 309. A display device 307 such as a CRT, an input device 304 such as a keyboard, and a pointing device 308 such as a mouse are also communicably connected with each other via the system bus 309.

The ROM 303 or HDD 306 stores a control program such as an operating system or Web application, and print data of this example. The CPU 301 reads out, as needed, the control program from the ROM 303 or HDD 306 into the RAM 302, and then executes it, thereby delivering its function as a computer.

The CPU 301 displays various pieces of information using the display device 307, and also accepts a user instruction or the like from the input device 304 or pointing device 308. The CPU 301 also communicates with other devices on the LAN 150 via the network I/F 305. When an MFP performs pull print, the CPU 301 executes a service (program) for providing print data in response to a request from the MFP.

### <Software Configuration of MFP>

The MFPs 110 and 120 have the same software configuration, which includes the following components as shown in Fig. 4. The software modules are stored in the HDD 204, and executed by the CPU 201.

A UI unit 401 is a software module which displays, on the operation unit 211, a UI for using an internal function such as a UI for a pull print function, a UI for an image data transmission function, or a setting UI for setting the MFP main body.

An HTTP communication unit 402 is a software module which makes communication according to the HTTP protocol by operating the network I/F 206.

A transmission/reception data processing unit 403 is a software module which analyzes print data and the like received via the HTTP communication unit 402, and instructs a function control unit 405 to execute print processing and the UI unit 401 to display a UI. The transmission/reception data processing unit 403 stores, in an image data management unit 404, image data contained in the received print data. The transmission/reception data processing unit 403 also externally transmits, via the HTTP communication unit 402, input information received from the UI unit 401.

The image data management unit 404 is a software module which manages image data received from the transmission/reception data processing unit 403.

The function control unit 405 is a software module which controls functions such as a pull print function and an image data transmission function. For example, the function control unit 405 operates the printer unit 213 to execute print processing according to print settings in a job script contained in the print data received from the transmission/reception data processing unit 403.

### <Software Configuration of Server 130>

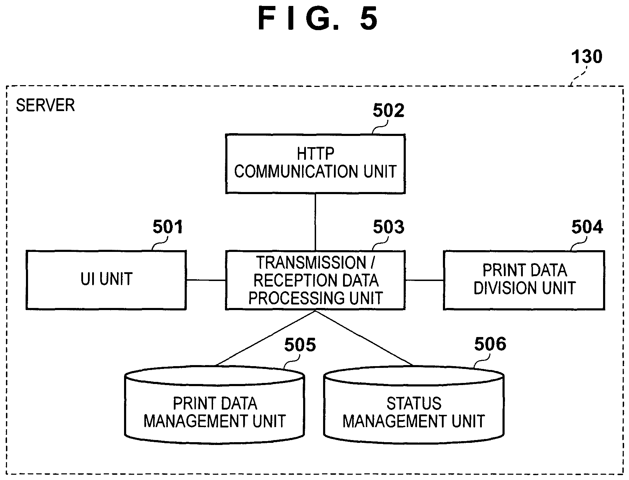

Fig. 5 is a block diagram showing the software configuration of the server 130 according to this example. Software modules shown in Fig. 5 are stored in the HDD 306, and executed by the CPU 301. A UI unit 501 is a software module which displays, on the display device 307, a UI for setting the pull print function of the server 130. Using the UI for setting the pull print function, it is possible to set, as a threshold value, the required time for print processing, which serves as, for example, a criterion of determination when dividing print data. Assume, in this example, that the threshold value is set to 2 min. That is, when the required time for print processing is assumed to exceed 2 min, division processing is performed. Alternatively, a data amount or the number of pages of print data can be used as a threshold value.

An HTTP communication unit 502 is a software module which makes communication according to the HTTP protocol by operating the network I/F 305. A transmission/reception data processing unit 503 is a software module which executes, for data received via the HTTP communication unit 502, processing corresponding to contents of the data. If, for example, the data is print data uploaded from the PC 190, the transmission/reception data processing unit 503 stores the data in a print data management unit 505.

A print data division unit 504 is a software module which divides print data received from the transmission/reception data processing unit 503.

The print data management unit 505 is a software module which stores print data or passes stored print data to the transmission/reception data processing unit 503 in response to an instruction from the transmission/reception data processing unit 503. Data managed by the print data management unit 505 will be described later.

A status management unit 506 is a module which manages the status of print data being processed by the MFP 110 or 120. In response to an instruction from the transmission/reception data processing unit 503, the status management unit rewrites the status. Data managed by the status management unit 506 will be explained later.

### <Data Managed by Print Data Management Unit 505 and Status Management Unit 506>

Fig. 6A is a view schematically showing the print data list 600 managed by the print data management unit 505 of the server 130. The print data have been uploaded from the PC 190 according to a user instruction. Assume, in this example, that the print data list 600 is stored in the HDD 306 of the server 130. Although a table format is used in the schematic view in this example, a text file in a CSV (Comma Separated Values) format or XML (Extensible Markup Language) format may be used. The list presents information. To specify this, the list may also be referred to as list information.

The print data list 600 includes columns 601 to 607. The column 601 represents a print data ID. The print data ID is used to uniquely identify print data. The print data IDs have serial numbers starting from "1" in this example. The print data ID is desirably an ID for uniquely identifying print data, such as UUID (Universally Unique Identifier).

The column 602 indicates a print data name. The print data name is used by the user to identify the print data. When uploading print data from the PC 190 to the server 130, the user inputs a print data name for the print data. Although the user inputs a print data name in this example, any name may be used as long as the user can identify print data. For example, the file name of image data may be used as a print data name.

The column 603 represents a user name for identifying a user who has uploaded the print data; the column 604, the number of copies of image data to be printed; the column 605, the number of pages of image data; and the column 606, image data. Image data is held as print data in this example. For example, however, only data used to specify image data such as the path of the image data may be held as print data, and the image data may be stored in another location. Image data in various formats such as a bitmap format and vector format are also applicable to this example, as a matter of course. For example, a PDF format is a format of image data. The column 607 indicates a job script in which print settings are described. The print settings include, for example, layout settings.

Fig. 6B schematically shows a print data status list 650 managed by the status management unit 506 of the server 130. Assume, in this example, that the print data status list 650 is stored in the HDD 306 of the server 130. Although a table format is used in the schematic view in this example, a text file in a CSV (Comma Separated Values) format or XML (Extensible Markup Language) format may be used.

The status list 650 presents information which includes columns 651 to 656 and indicates the status of print data processing. Each status in the status list is rewritten in response to an instruction of the transmission/reception data processing unit 503 of the server 130.

The column 651 represents a print data ID. The print data ID is used to uniquely identify print data. The print data ID enables to specify print data the status of which is represented by a corresponding status. This corresponds to the "print data ID" column 601 of the print data list 600.

The column 652 indicates the processing status of the print data. The processing status of the print data includes "unprocessed", "in progress", and "complete". When an MFP starts pull print, the processing status becomes "in progress". When an MFP completes pull print, the processing status becomes "complete".

The column 653 represents the division status of the print data. When the print data is divided, "true" is set; otherwise, "false" is set. The column 654 indicates the number of copies for which an MFP has completed printing. The column 655 represents job scripts after the print data is divided. If the print data is divided, job scripts the number of which is equal to that of the divided print data are stored. The column 656 indicates the MFP which is processing the print data.

When, for example, the user uploads print data to the server 130, the server 130 generates and stores the print data list 600 and status list 650. For the status list 650, "unprocessed" is set as the initial value of the processing status, and "false" is set as the initial value of the division status.

### <Pull Print Processing (With Job Division) in MFP 110>

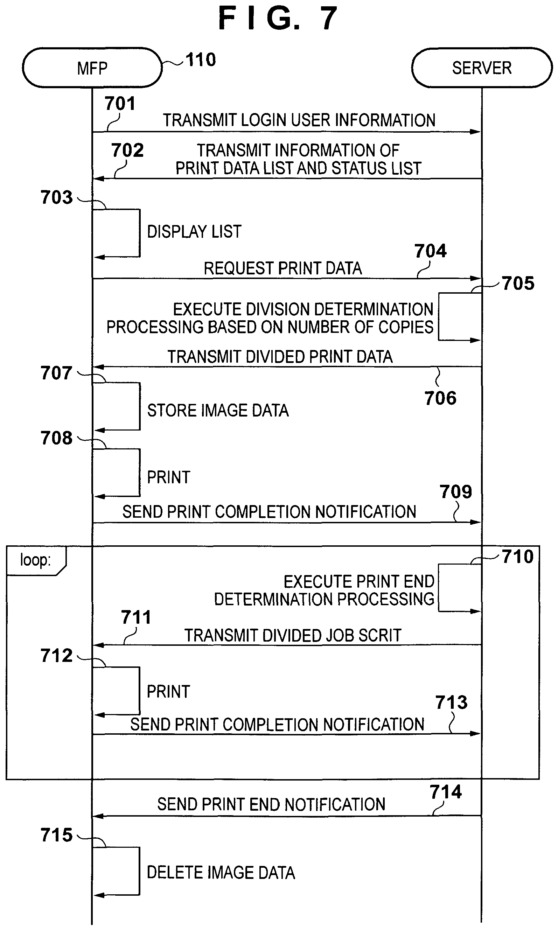

The user instructs the MFP 110 to start pull print. Processing between the MFP 110 and the server 130 in this case will be described with reference to Figs. 7 to 13.

Fig. 7 is a sequence chart showing communication processing between the MFP 110 and the server 130. Fig. 7 particularly shows a case in which print data is divided since a processing time for the print data exceeds a threshold value (2 min in this example).

The user operates the operation unit 211 of the MFP 110 to log in the MFP 110. For example, the user logs in by inputting his/her user name and password through a login UI (not shown) displayed on the operation unit 211. Alternatively, the user holds a login card with his/her user name and password recorded over a card reader or the like (not shown). Upon accepting such a login operation, the MFP 110 performs login processing. In the login processing, the MFP 110 may check the input user name and password against a user name and password held in itself, or a separate authentication server (not shown) may check the input user name and password. Alternatively, the server 130 may also serve as an authentication server. If the login processing succeeds, the process advances to step 701.

In step 701, the transmission/reception data processing unit 403 requests, of the server 130, a print data list held in the server 130 using the GET command of HTTP. More specifically, the transmission/reception data processing unit 403 passes login user information (a user name and the like) and the address of the server 130 to the HTTP communication unit 402. In response to this, the HTTP communication unit 402 communicates with the HTTP communication unit 502 of the server 130 according to the HTTP protocol. A description of the operation of the HTTP communication unit 402 and HTTP communication unit 502 will be omitted hereinafter.

In step 702, in response to a request, the server 130 transmits information of part of the print data list 600 of the login user and information of part of the status list 650 to the MFP 110. More specifically, the transmission/reception data processing unit 503 acquires, from the print data management unit 505, information of print data associated with the user name received in step 701. The associated print data includes print data uploaded by the login user and print data which the login user is allowed to access. To allow the user to access print data, a user name holding an access right is registered as an item contained in the print data list or another data. Assume that in this example, only the user who has uploaded print data is given a print right for the print data. In this example, therefore, the transmission/reception data processing unit 503 searches the "user name" column 603 of the print data list 600 for a user name corresponding to the login user name, and then reads data associated with the corresponding user. If, for example, the login user name is "A", the transmission/reception data processing unit 503 acquires data in the first and second rows of the print data list as corresponding data. After that, the transmission/reception data processing unit 503 acquires status information associated with the acquired print data from the status management unit 506. The association in this case is determined based on the print data ID. That is, the server 130 transmits, to the MFP 110, a status list of data with the same ID as the acquired print data ID together with the print data list. The information transmitted to the MFP 110 includes attribute information such as the print data ID 601, print data name 602, and user name 603 of the print data list 600, and the print data ID 651, processing status 652, and division status 653 of the status list 650. The server 130 does not transmit the image data 606 having a large data size and the like at this time.

In step 703, the operation unit 211 of the MFP 110 displays a UI for the UI unit 401 to accept selection of print data. The information received in step 702 is used as print data information to be displayed at this time.

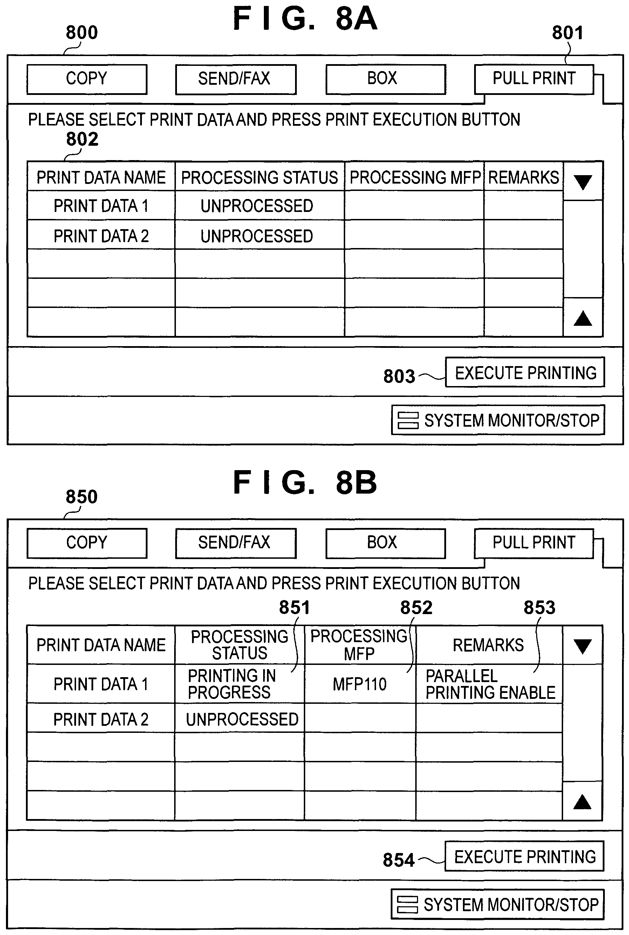

A UI 800 shown in Fig. 8A is an example of a UI which is displayed by the UI unit 401 of the MFP 110 in step 703. The UI 800 is displayed when the print data list 600 and status list 650 are as shown in Fig. 6B and then the user "A" logs in.

A button 801 is used to switch to a pull print setting screen. The UI 800 displays the pull print setting screen. By pressing another switching button, it is possible to switch to a corresponding setting screen such as a "copy" or "send/fax" setting screen.

A list 802 presents print data information (part of the status list in this example), and is used to accept selection of print data. Since the user "A" has logged in, print data 1 and 2 which the user "A" can access are displayed. Since the print data are not processed by any MFP yet, their processing statuses are "unprocessed".

A button 803 is used to accept start of pull print. When the button 803 is pressed, pull print of selected print data of the list 802 starts.

Referring back to Fig. 7, in step 704, the MFP 110 transmits a request for a print job selected by the server 130. More specifically, the print data ID of the print data which the UI unit 401 accepted in step 703 is transferred to the transmission/reception data processing unit 403. The transmission/reception data processing unit 403 sends a request for the selected print data to the server 130 via the HTTP communication unit 402. At this time, the request message of the print data contains information indicating the print processing capacity of the MFP 110. If, for example, the print speed of the MFP 110 is 50 ppm (page/min), the request message contains information indicating that the printing capacity is 50 ppm.

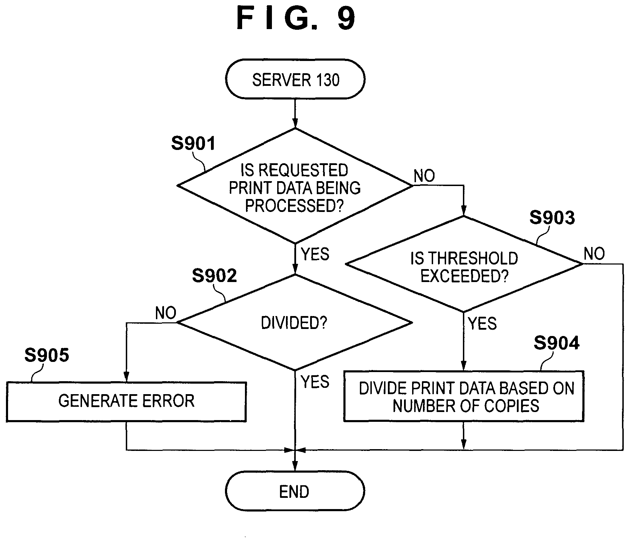

In step 705, the server 130 determines based on the number of copies of the requested print data whether to divide the print data. If the server 130 determines to divide the print data, it divides the print data. Note that in the print data division processing, a print job based on the print data is divided instead of dividing the data. By dividing the print data, job scripts the number of which is equal to that of the divided print data are generated and stored in the column 655 of the status list. In each job script, the number of copies to be printed for the divided print data is written. Each job script defines a job as its name implies. A print job defined in each job script is executed. That is, copy and rewrite of a job script means division of a print job. A print job is divided in this example such that each of divided print jobs can be completed within a period of time designated as a threshold value. Detailed processing in step 705 will be described later with reference to Fig. 9.

### <Division Example of Job Script>

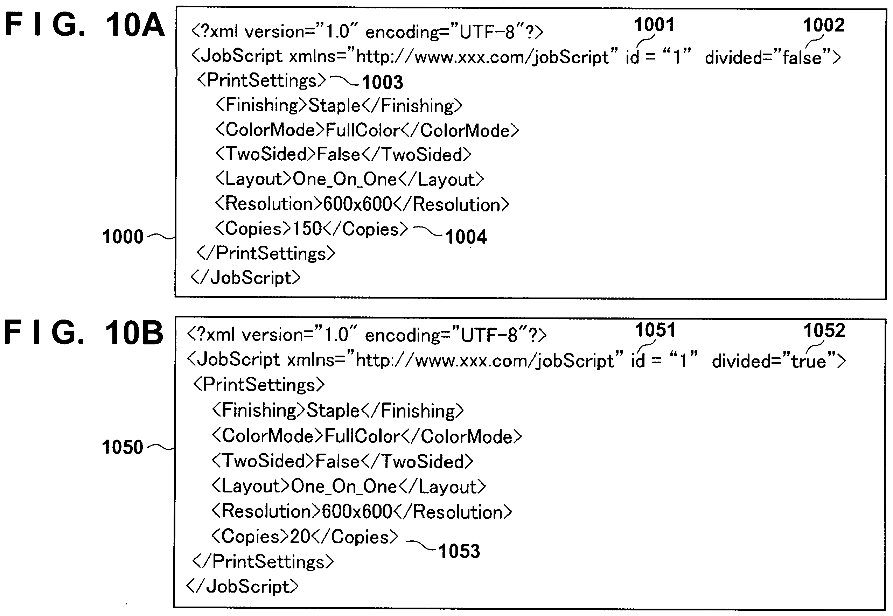

Figs. 10A and 10B show job scripts of "print data 1" before and after division processing. A job script 1000 before division processing is described in XML, and stored in the "job script" column 607 of the print data list 600. The job script is not limited to that shown in this example, and may be a job ticket according to JDF (Job Definition Format). Although the script is described in XML in this example, it may be in any format as long as the MFP can process the script. A job script is generated by the server and stored in it when print data is uploaded.

An attribute 1001 indicates a print data ID. An attribute 1002 is a division attribute indicating whether the print data has been divided. Since its value is "false", the attribute 1002 indicates that the print data has not been divided. A "print settings" tag 1003 indicates that there are print settings after the tag, and print settings are described in child elements. A "copies" tag 1004 indicates setting of the number of copies to be printed. That is, "print data 1" is set so that 150 copies are to be printed.

A job script 1050 shown in Fig. 10B is a job script obtained by dividing the job script 1000, and is a job script of "print data 1" after division processing. The job script 1050 is stored in the "divided job script" column 655 of the status list 650.

An attribute 1051 indicates a print data ID. The print data ID is the same as that before division processing. An attribute 1052 is a division attribute indicating whether the print data has been divided. Since its value is "true", the attribute 1052 indicates that the print data has been divided. A "copies" tag 1053 represents the number of copies to be printed. This value has been rewritten with a value obtained by dividing the job script 1000. Since the value of the "copies" tag is "20", 20 copies are to be printed.

Since 150 copies of "print data 1" are to be printed, seven job scripts 1050 and a job script in which the value of a tag 1053 is "10", that is, eight job scripts in total are generated after the division processing. These eight job scripts are stored in the column 655 of the status list 650. One job script corresponds to one print job. Each job script has an associated processing status. When a job script is generated in upload or division processing, a value indicating "unprocessed" is set as its processing status. This processing status can be implemented by associating the "processing status" column contained in the status list 650 with each divided job script to divide the "processing status" column. To prepare for retransmission of a job script, it is desirable to assign sequence numbers to the divided job scripts, and store the sequence numbers in association with the job scripts. This is unnecessary if a job script is not retransmitted.

Referring back to Fig. 7, if the print job is divided in step 705, the process advances to step 706. Again, Fig. 7 is a sequence chart when print data is divided. Assume, therefore, that the print job is divided in step 705.

In step 706, the server 130 transmits the divided print data to the MFP 110. More specifically, the transmission/reception data processing unit 403 of the server 130 acquires the image data of the print data list 600 and a divided job script of the status list 650, and transmits them to the MFP 110 via the HTTP communication unit 502. In this case, the transmission/reception data processing unit 503 rewrites the "processing status" column 652 of the transmitted print data from "unprocessed" to "in progress". The transmission/reception data processing unit 503 also writes, in the "processing MFP" column 656, the ID (that is, identification information) of an image forming apparatus which executes the print job, that is, "MFP 110" in this example. The transmitted job script is deleted from the status list 650. At the same time, the number of copies to be printed by the transmitted job script is added to the value of the "number of printed copies" column 654.

Note that delete of the job script and addition of the number of copies to be printed may be performed upon receiving a print completion notification. In this case, even if a communication error occurs, it is possible to retransmit the job script. To do this, the server 130 has to associate a job script with its processing result, delete the job script of the print job for which processing is complete, and add the number of printed pages. It is, therefore, necessary to assign a unique ID to each job script in dividing a job, and include the unique ID in print data and a print completion notification.

In step 707, the MFP 110 analyzes the print data received in step 706, and stores image data if the print job has been divided. More specifically, the transmission/reception data processing unit 403 analyzes the job script of the received print data to determine whether the job has been divided. The transmission/reception data processing unit 403 determines based on the value of the attribute 1052 of the job script 1050 whether the job has been divided. If the job has been divided, the transmission/reception data processing unit 403 stores, in the image data management unit 404, the image data contained in the print data. At the same time, the transmission/reception data processing unit 403 also saves a print data ID in association with the image data.

In step 708, the transmission/reception data processing unit 403 instructs the function control unit 405 to print the print data received in step 706. The function control unit 405 prints the image data contained in the received print data according to processing described in the job script contained in the print data. When the print processing starts, the UI unit 401 displays a screen indicating that printing is in progress.

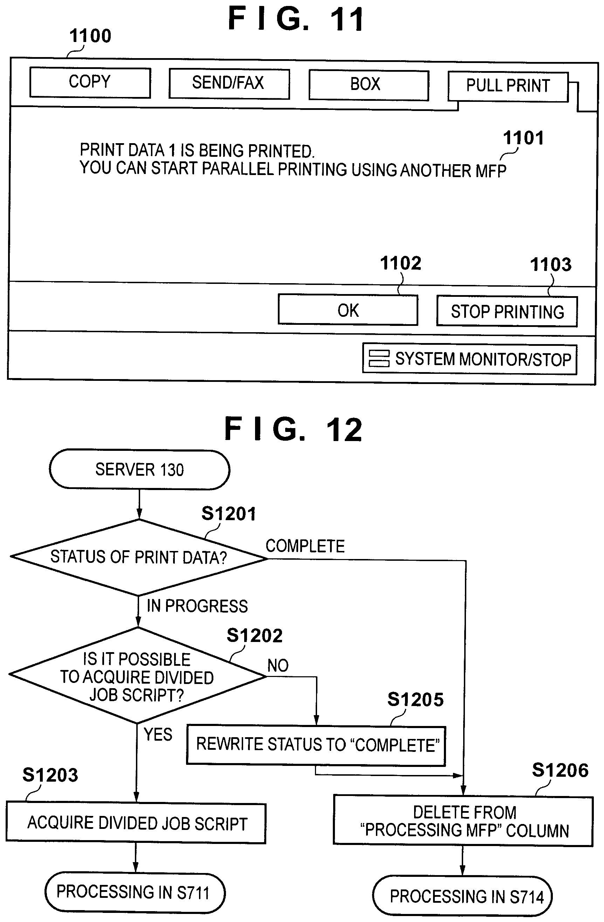

Fig. 11 shows an example of a UI 1100 which is displayed on the operation unit 211 by the UI unit 401 of the MFP 110 in step 708 after print processing starts.

Text 1101 indicates that print processing is in progress, and that it is possible to execute parallel print processing with another MFP for print data being printed. This can prompt the user to execute parallel print processing with another MFP after print processing starts.

A button 1102 is used to close the UI. When the button 1102 is pressed, the UI unit 401 switches to a UI for displaying the print data list shown in Fig. 8A.

A button 1103 is used to stop print processing. When the button 1103 is pressed, the function control unit 405 stops print processing.

Note that the screen of Fig. 11 is not displayed without any condition, and may be displayed only if a print job is determined to be a divided print job (to also be referred to as a divided job) based on the division attribute of a job script.

Referring back to Fig. 7, if the print processing is complete, the MFP 110 notifies the server 130 in step 709 that the print processing is complete. The completion notification contains the print data ID. Upon receiving the print completion notification, the server 130 determines in step 710 whether print processing is complete for print data having the print data ID contained in the notification. Practical processing will be described with reference to Fig. 12. If the print processing is incomplete, an unprocessed one of the divided job scripts is read (acquired) to advance to step 711; otherwise, the process advances to step 714.

In step 711, the transmission/reception data processing unit 503 transmits the acquired unprocessed one of the divided job scripts to the MFP 110. At this time, the transmitted job script is deleted from the status list 650. Along with this, the number of copies to be printed by the transmitted job script is added to the value of the "number of printed copies" column 654. Note that delete of the job script and addition of the number of copies to be printed may be performed upon receiving a print completion notification, as described above.

In step 712, the MFP 110 performs print processing according to the settings of the job script received in step 711. More specifically, the transmission/reception data processing unit 403 acquires, from the image data management unit 404, image data having the same print ID as that of the received divided job script. After that, the transmission/reception data processing unit 403 transfers the divided job script and acquired image data to the function control unit 405. The function control unit 405 prints the image data according to processing described in the divided job script. In this example, in consideration of a network load and a data reception time of the MFP 110, the image data management unit 404 is provided in the MFP 110. Since the MFP 110 has saved, in the image data management unit 404, the image data contained in the print data received in step 706, the server 130 only needs to send the divided job script to the MFP 110 in step 711. Note that the present invention is not limited to this. For example, the MFP 110 may not have the image data management unit 404, and the server 130 may transmit print data containing image data and a divided job script every time. This configuration eliminates the need for the MFP to have a memory capacity to save image data.

In step 713, the transmission/reception data processing unit 403 transmits a print completion notification to the server 130. After that, the server 130 repeats the process from step 710.

If it is determined in step 710 that the print processing is complete, the server 130 transmits a print end notification to the MFP 110 in step 714. Processing in step 714 is executed by the server 130 after print processing of all the divided job scripts is completed and after the repetitive processing in steps 710 to 713 ends. At this time, the server 130 may delete, from the print data list 600 and status list 650, information of the print data specified by the print data ID for which print processing is complete. Note that this is applicable to a case in which uploaded print data is allowed to be printed only once. If print data is allowed to be printed several times, the print data remains.

In step 715, the transmission/reception data processing unit 403 of the MFP 110 deletes the image data stored in the image data management unit 404. More specifically, the transmission/reception data processing unit 403 transfers, to the image data management unit, the print data ID contained in the print end notification received in step 714 while instructing to delete the image data. The image data management unit 404 deletes the image data specified by the print data ID.

An example of a pull print procedure when processing time for print data exceeds a threshold value (2 min in this example) and thus the print data is divided has been explained.

### <Print Job Division Processing>

Fig. 9 is a flowchart illustrating the processing in step 705 which divides a print job when the server 130 according to this example determines, based on the number of copies, to divide the print job. The following description will be given by assuming that software modules predominate. In fact, the CPU which executes the software modules predominates, and Fig. 9 illustrates a procedure. The same goes for Fig. 7, or other flowcharts or sequences.

In step S901, the transmission/reception data processing unit 503 determines whether requested print data is being processed. More specifically, the transmission/reception data processing unit 503 specifies the status of the print data using the print data ID of the requested print data and the print data ID of the column 651 of the status list 650, and acquires the processing status of the column 652. Then, the transmission/reception data processing unit 503 makes determination with reference to the processing status. If the processing status is "in progress", the process advances to step S902. If the processing status is "unprocessed", the process advances to step S903.

In step S902, the transmission/reception data processing unit 503 determines whether the requested print data has been divided. This determination is made with reference to the "division status" column 653 of the status list 650. If the division status is "false", the process advances to step S905. Alternatively, if the division status is "true", this means that the data has been divided, and thus the process ends.

In step S905, the transmission/reception data processing unit 503 generates an error. It is impossible to divide a print job whose execution has already started, and an error associated with this is generated. After an error is generated, the process ends. Generating an error includes, for example, storing a corresponding error code in a predetermined area.

On the other hand, in step S903, the transmission/reception data processing unit 503 determines whether the required time for print processing exceeds a threshold value. This determination is made using a value obtained by calculating the number of pages to be printed using the number of copies of the column 604 and the number of pages of the column 605 of the print data list 600, and estimating the required time for print processing based on the print processing capacity received in step 704. Any other value may be used as long as the value is a processing time index value, as a matter of course. If the required time for print processing exceeds the threshold value, the print job is determined to be divided. If, for example, the requested print data is "print data 1", the number of copies of the column 604 is 150 and the number of pages of the column 605 is 5. Therefore, the number of pages to be printed is 750. If the print processing capacity of the MFP 110 is 50 ppm, the time taken to execute print processing is 15 min. Since the processing time exceeds 2 min as a threshold value, the print job is determined to be divided. If the requested print data is "print data 2", the number of pages to be printed is 15 and the required time for print processing is 15/50 min which is less than the threshold value (2 min), thereby determining that the print job is not to be divided. Although in this example, whether the time exceeds the threshold value is determined by acquiring the print processing capacity from the MFP 110, this determination may be made without acquiring the print processing capacity. For example, the number of pages may be used as a threshold value, and whether the number of pages to be printed exceeds the threshold value may be determined. Alternatively, this determination may be made depending on whether double-sided printing is set or whether a layout setting (for example, 2 in 1) is set. Even if, for example, print settings such as a layout have been made, layout processing is executed parallel to print processing, and a processing time for the layout processing is not added for the second page and thereafter. Thus, if a layout such as N in 1 is designated, the number of sides of paper sheets, that is, a value obtained by dividing the number of pages by N is used as the number of pages to be printed to be compared with the threshold value. In the case of double-sided printing, the average time required to reverse one print sheet is added to the required time for print processing for one print sheet, and the thus obtained time is multiplied by the number of sheets to be printed, thereby obtaining a required time for print processing for double-sided printing. In this case, the reversal time may be received as part of processing capacity information from the MFP. In either case, if the estimated required time for print processing exceeds the set threshold value, the process advances to step S904; otherwise, the process ends.

In step S904, the print data division unit 504 divides the job script of the print data. Specifically, division of the job script is implemented by obtaining copies of the job script before the division processing, the number of which is equal to that of divided job scripts, and rewriting the value of a "copies" tag contained in each job script with the number of copies to be printed by each divided print job. The number of divided job scripts and the number of copies to be printed by each job script are determined as follows.

The job script is divided for every number of copies determined based on the threshold value. That is, division processing is performed so that each divided job script completes print processing of the print data for the number of copies designated in the job script within the threshold time. For example, if the requested print data is "print data 1", print data 1 is divided into eight print data so that print processing is executed for every 20 copies. Consequently, a print job is divided into seven print jobs each of which prints 20 copies and one print job which prints 10 copies. This is because the print capability is 50 ppm and the number of pages which can be printed within the threshold value (2 min) is equal to or less than 100 in this example. Assume that the number of pages of "print data 1" is 5 and 20 copies are printed. In this case, the number of pages to be printed is 100, and the print processing time does not exceed the threshold value of 2 min. Division of a print job will also be described as division of print data. Divided print jobs have a common print data ID. If the time required to print one copy exceeds a threshold value, a job script is generated to form one print job for one copy.

After dividing the print data, the transmission/reception data processing unit 503 rewrites the division status of the column 653 of the status list 650 with "true". Furthermore, the transmission/reception data processing unit 503 stores the divided job scripts in the column 655 of the status list 650.

The job scripts before and after the division processing are as described with reference to Figs. 10A and 10B. By dividing the print data in a unit of one copy to meet conditions, it is possible to print each copy as a set even if a plurality of MFPs parallelly execute print processing. When the division processing is complete, the process ends.

### <Determination of Print Completion>

Fig. 12 is a flowchart showing processing of determining whether the print processing of the server 130 in step 710 is complete. In step S1201, the transmission/reception data processing unit 503 refers to the "processing status" column 652 of the status list 650. If the value of the column 652 is "in progress", the process advances to step S1202. If the value of the column 652 is "complete", the process advances to step S1206.

In step S1202, the transmission/reception data processing unit 503 determines whether there still exists a divided job script. More specifically, the transmission/reception data processing unit 503 inquires of the status management unit 506 whether there is a divided job script of a corresponding print data. The status management unit 506 determines whether there exists data in the column 655 of the status list 650. Consequently, the status management unit 506 transfers information indicating the presence/absence of a job script to the transmission/reception data processing unit 503. The transmission/reception data processing unit 503 determines the presence/absence of a divided job script based on the received information. If it is possible to acquire a divided job script, the process advances to step S1203; otherwise, the process advances to step S1205.

In step S1203, the transmission/reception data processing unit 503 acquires one divided job script from the status management unit 506, and the process advances to step 711 in Fig. 7.

In step S1205, the transmission/reception data processing unit 503 rewrites the processing status of the column 652 of the status list 650 from "in progress" to "complete". More specifically, the transmission/reception data processing unit 503 instructs the status management unit 506 to rewrite the processing status.

In step S1206, the transmission/reception data processing unit 503 deletes, from the "processing MFP" column 656 of the status list 650, the MFP which has transmitted a print completion notification. If the corresponding MFP is the MFP 110, the transmission/reception data processing unit 503 deletes "MFP 110", and the process advances to step 714 in Fig. 7.

### <Pull Print Processing (without Job Division) in MFP 110>

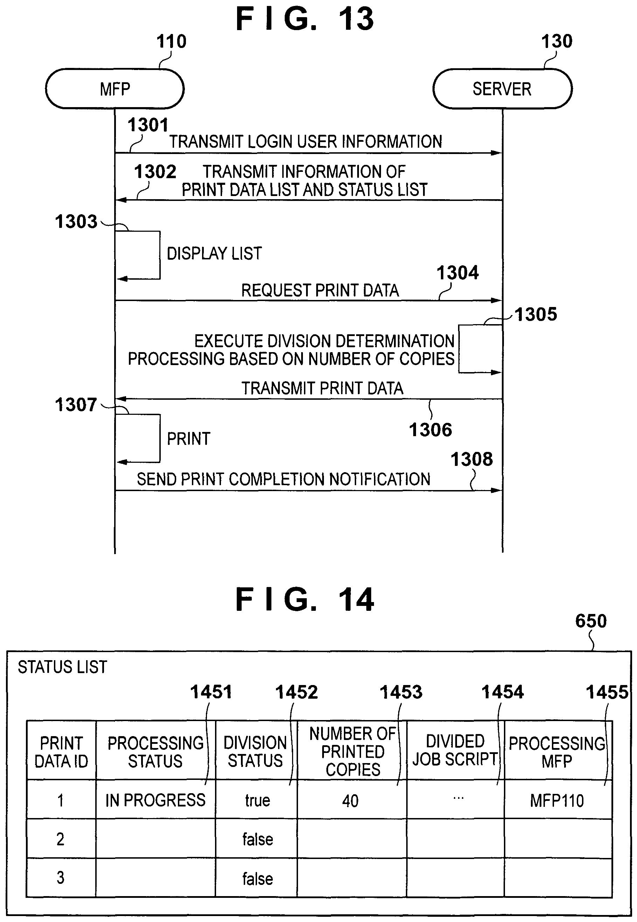

A case in which print data is not divided since the processing time for the print data does not exceed the threshold value (2 min) will be explained. Fig. 13 is a sequence chart showing communication processing between the MFP 110 and the server 130. Fig. 13 particularly shows a case in which the processing time for the print data does not exceed the threshold value (2 min). A description of the same parts as in the processing in Fig. 7 when the processing time for the print data exceeds the threshold value (2 min) will be omitted, and only different parts will be explained.

Processing in steps 1301 to 1304 is the same as that in step 701 to 704, and a description thereof will be omitted.

In step 1305, the server 130 determines whether to divide the requested print data. This determination processing is the same as that described with reference to Fig. 9. Since Fig. 13 is a sequence when the processing time for the print data does not exceed the threshold value (2 min), the processing time is determined in step S903 not to exceed the threshold value.

In step 1306, the server 130 transmits the requested print data to the MFP 110. More specifically, the transmission/reception data processing unit 403 of the server 130 acquires image data of the print data list 600 and a job script in which print settings are described, and transmits them to the MFP 110 via the HTTP communication unit 502. Since the acquired job script has been acquired from the print data list 600, it has not been divided. In the case of "print data 1", the acquired job script is the job script 1000 in Fig. 10A. At this time, the transmission/reception data processing unit rewrites the processing status of the column 652 of the transmitted print data from "unprocessed" to "in progress". Furthermore, the transmission/reception data processing unit writes "MFP 110" in the "processing MFP" column 656. In this case, the original job script which has not been divided is never deleted. This is the same as in Fig. 7.

In step 1307, the MFP 110 analyzes the print data received in step 1306, and executes print processing. The transmission/reception data processing unit 403 analyzes the received print data, and determines whether the print data has been divided. Since the print data has not been divided, the transmission/reception data processing unit 403 instructs the function control unit 405 to execute print processing. The function control unit 405 prints the received image data according to processing described in the job script.

In step 1308, the MFP 110 notifies the server 130 that the print processing is complete. Upon receiving the notification, the server 130 deletes, from the print data list 600 and status list 650, information of print data specified by a print data ID contained in the notification. Note that this is applicable to a case in which uploaded print data is allowed to be printed only once. If print data is allowed to be printed several times, the server 130 may not delete the print data.

An example when print data is not divided has been explained. When the number of sheets to be printed is small and thus a print time is not so long, the print data is printed without undergoing division processing. It is thus necessary to exchange data such as print data between the server 130 and MFP 110 only once.

### <Pull Print Processing in MFP 120>

The user operates the MFP 120 after starting print processing using the MFP 110. A case in which the user starts printing "print data 1" using the MFP 110, and the print data has been divided will be explained hereinafter. In this case, processing between the MFP 120 and the server 130 will be described with reference to Figs. 14 to 16. A description of the same parts as in the pull print processing in MFP 110 will be omitted. When the MFP 110 and the server 130 repeat the processing in steps 710 to 713, print processing is executed in the MFP 110.

Fig. 14 shows a status list 650 managed by the status management unit 506 of the server 130 when the user operates the MFP 120. That is, the status list 650 of Fig. 14 indicates that processing of print jobs associated with print data 1 divided according to the procedure in Fig. 7 progresses, and two of the print jobs are complete or in progress. Each column of the status list 650 in Fig. 14 is the same as that of the status list 650 in Fig. 6B, and a description thereof will be omitted. Only different parts will be explained. A print data list is the same as that shown in Fig. 6A.

A field 1451 indicates that print data with a print data ID "1" is "in progress".

The value of a field 1452 is "true", which indicates that the print data with the print data ID "1" has been divided.

The value of a field 1453 is "40", which indicates that 40 copies of image data contained in the print data with the print data ID "1" have been printed.

A field 1454 stores job scripts obtained by dividing a job script contained in the print data with the print data ID "1".

The value of a field 1455 is "MFP 110", which indicates that an MFP that is processing the print data with the print data ID "1" is the MFP 110. That is, for print data 1, the MFP 110 has already printed 40 copies of 150 copies in total.

### <Pull Print Sequence by MFP 120>

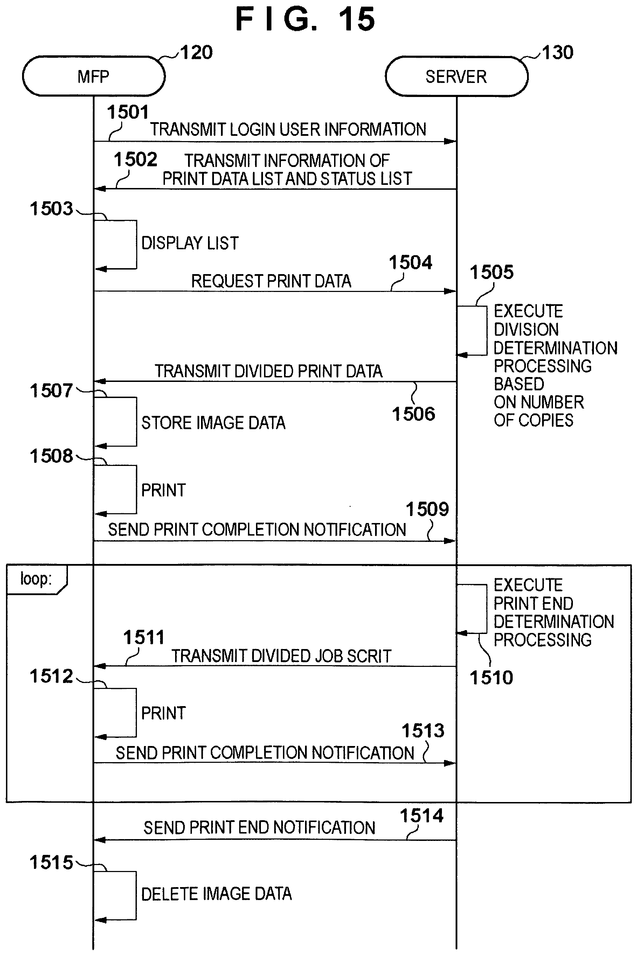

Fig. 15 is a sequence chart showing communication processing between the MFP 120 and the server 130. Fig. 15 particularly shows a sequence when print processing of "print data 1" has started and is in progress in the MFP 110. Assume that a print job associated with print data 1 has been divided by the server 130 prior to execution in the MFP 110. The processing of the server 130 is the same as in the case of the communication processing with the MFP 110 described with reference to Fig. 7, and only different parts will be described. The MFP 120 has the same hardware configuration and software configuration as those of the MFP 110, and a description of the same internal processing of the MFP 120 as that shown in Fig. 7 will be omitted. Each apparatus in Fig. 15 is also mainly controlled by its CPU, as in Fig. 7.

In step 1501, the MFP 120 transmits login user information (a user name and the like) to the server 130.

In step 1502, the server 130 transmits, to the MFP 120, information of part of the print data list 600 of the login user and information of part of the status list 650. At this time, the status list 650 is as shown in Fig. 14.

In step 1503, the MFP 120 displays, on the operation unit 211, a UI for the UI unit 401 to accept selection of print data. At this time, the MFP 120 displays information of print data using the information received in step 1502.

A UI 850 in Fig. 8B is an example of a UI which is displayed on the operation unit 211 by the UI unit 401 of the MFP 120 in step 1503.

The value of a field 851 is "in progress", which indicates that "print data 1" is being printed.

The value of a field 852 is "MFP 110", which indicates that an MFP that is printing "print data 1" is the MFP 110.

The value of a field 853 is "parallel printing enable", which indicates that it is also possible to start printing "print data 1" using the MFP 120. The values of the "print data name", "processing status", and "processing MFP" fields respectively correspond to the contents of the "print data ID" column 651, "processing status" column 652, and "processing MFP" column 656 of the received status list 650. The MFP 120 refers to, for example, the "divided job script" column 655 contained in the status list 650. If the value of the "division status" column 653 of the print data is "true", and there is a divided job script, that is, an unprocessed divided job remains, parallel printing is determined to be possible, which is indicated in a "remarks" column. If there is no divided job script, "parallel printing disable" is displayed.

A button 854 is used to accept a print start instruction. The user can select, from the displayed print data list, print data which is unprocessed or which can undergo parallel printing, and instruct printing by pressing the "execute printing" button 854. Assume that print data which can undergo parallel printing, for example, "print data 1" has been selected. In this case, when the button 854 is pressed, the MFP 120 also accepts a print start instruction of "print data 1", and the process advances to step 1504.

Referring back to Fig. 15, in step 1504, the MFP 120 transmits a print data request to the server 130. The requested print data here is print data for which an instruction has been accepted through the UI 850 of Fig. 8B, that is, "print data 1" in this example.

In step 1505, the server 130 determines whether it is possible to divide the print data. The determination processing is the same as that described with reference to Fig. 9, and a detailed description thereof will be omitted. Since printing of "print data 1" has already started and the print data has been divided, it is determined in step S902 that the print data has been divided. In step 1506, the server 130 transmits the divided print data to the MFP 120. More specifically, the transmission/reception data processing unit 403 of the server 130 acquires image data of the print data list 600 and one of the divided job scripts of the status list 650, and transmits them. At this time, the transmission/reception data processing unit 503 adds "MFP 120" to the "processing MFP" column 656. The transmitted job script is deleted from the status list 650.

In step 1507, the transmission/reception data processing unit 403 of the MFP 120 analyzes the print data received in step 1506, and stores the image data in the image data management unit 404. At the same time, the transmission/reception data processing unit 403 also stores a print data ID.

In step 1508, the transmission/reception data processing unit 403 instructs the function control unit 405 to print the print data received in step 1506. The function control unit 405 prints the image data contained in the received print data according to processing described in a job script contained in the print data. When the print processing starts, the UI unit 401 displays a screen indicating that printing is in progress. Although the screen indicating that printing is in progress is not shown, it prompts the user to execute parallel printing like the UI of Fig. 11. In this example, parallel print processing using the MFPs 110 and 120 is described. The present invention, however, is not limited to two MFPs, and another MFP can also execute parallel printing.

In step 1509, the MFP 120 notifies the server 130 that the print processing is complete. The completion notification contains the print data ID.

Upon receiving the print completion notification, the server 130 determines in step 1510 whether print processing for the print data ID contained in the notification is complete. Detailed processing of the server 130 in step 1510 is almost the same as that in Fig. 12 but there are two different points. The first point is that step S1203 branches to step 1511 of Fig. 15. The second point is that step S1206 branches to processing in step 1514 of Fig. 15. Step 1514 means that the process has exited from the loop in steps 1510 to 1513. Processing in step 1514 will be described later.

In step 1511, the transmission/reception data processing unit 503 transmits, to the MFP 120, the divided job script acquired in step S1203 of Fig. 12.

In step 1512, the MFP 120 executes print processing according to settings described in the job script received in step 1511. More specifically, the transmission/reception data processing unit 403 acquires, from the image data management unit 404, image data with the same print ID as that in the received divided job script. After that, the transmission/reception data processing unit 403 transfers the divided job script and acquired image data to the function control unit 405. The function control unit 405 prints the image data according to processing described in the divided job script. If an error such as a jam occurs in printing, the server 130 may be notified of the error. In this case, the server 130 does not transmit a divided job script to the MFP 120 but only transmits it to the MFP 110 from then on.

In step 1513, the transmission/reception data processing unit 503 transmits a print completion notification to the server 130. Then, the server 130 executes processing in step 1510.

Upon receiving the notification, the server 130 repeatedly executes the processing from step 1510.

If it is determined in step 1510 that the print processing ends, the process branches to step 1514. The processing in step 1514 is performed by the server 130 after the print processing of the divided job scripts is completed. This processing is performed after the process exits the loop in steps 1510 to 1513. In step 1514, the server 130 transmits a print end notification to the MFP 120.

In step 1515, the transmission/reception data processing unit 403 of the MFP 120 deletes the image data stored in the image data management unit 404.

As described above, by dividing print data according to print setting contents prior to execution of printing, it becomes possible to execute parallel printing using another MFP connected to the same network even after a certain image forming apparatus starts print processing. In this example, since a job is divided in a unit of one copy of printed materials, contents of printed materials of image forming apparatuses are the same except for the number of copies. This facilitates management of divided print jobs, thereby simplifying programs for implementing the print system of the server or MFP according to the present invention.

Note that in this example, a print job is divided in a unit of one copy. However, it is possible to divide one copy of printed materials into a plurality of parts and then parallelly print them although this complicates management of the jobs. In this case, since output materials of image forming apparatuses which execute parallel printing are different, it is necessary to strictly manage contents of print jobs and completion of the jobs. That is, as described as an option in this example, a unique ID is assigned to each job script (that is, each print job), and the server deletes a corresponding job script and records a printed range every time the MFP sends a print job completion notification. In this way, when processing of one copy of printed materials is completed, completion of printing is determined.

### [Second Example]

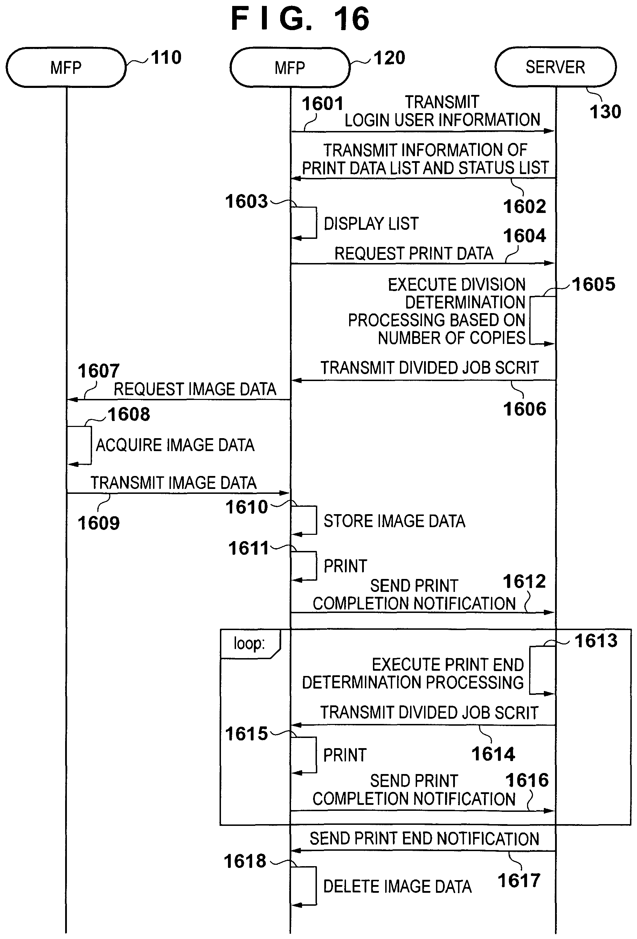

The second example of the present invention will be described with reference to Fig. 16. A different point from the first example is an apparatus from which image data is acquired when an MFP 120 starts printing in parallel with an MFP 110. That is, in the first example, print data containing image data is acquired from the server 130. In the second example, image data contained in print data is acquired from the MFP 110. A system configuration, the hardware configuration and software configuration of the MFP and a server 130, and the like in the second example are the same as those in the first example.

Fig. 16 is a sequence chart showing communication processing between the MFPs 110 and 120 and the server 130 when the MFP 120 parallelly prints print data being printed by the MFP 110. A description of the same parts as in the processing shown in Fig. 15 will be omitted.

Processing in steps 1601 to 1605 is the same as that in steps 1501 to 1505 of Fig. 15, and a description thereof will be omitted.

In step 1606, the server 130 transmits, to the MFP 120, a divided job script and the identifier of the MFP 110 necessary for communication. More specifically, a transmission/reception data processing unit 503 of the server 130 instructs a status management unit 506 to acquire "processing MFP" information. The status management unit 506 acquires an MFP ("MFP 110" in this example) which is processing target print data (print data 1) from a column 656 of a status list 650, and transfers it to the transmission/reception data processing unit 503. The transmission/reception data processing unit transmits the divided job script acquired in step 1605 and the acquired "processing MFP" information to the MFP 120 via an HTTP communication unit 502.

In step 1607, the MFP 120 requests image data of the MFP 110. More specifically, a transmission/reception data processing unit 403 of the MFP 120 analyzes the divided job script received in step 1606. The transmission/reception data processing unit 403 of the MFP 120 requests, of the MFP 110 as an image forming apparatus which is processing the print data, image data with a print data ID acquired by the analysis processing. The identifier received in step 1606 is set as the destination of the request.

In step 1608, a transmission/reception data processing unit 403 of the MFP 110 acquires, from an image data management unit 404, image data with the print ID received in step 1607.

In step 1609, the transmission/reception data processing unit 403 of the MFP 110 transmits the image data acquired in step 1608 to the MFP 120.

In step 1610, the transmission/reception data processing unit 403 of the MFP 120 stores the image data received in step 1609 in the image data management unit 404. At the same time, the transmission/reception data processing unit 403 also stores a print data ID.

In step 1611, the transmission/reception data processing unit 403 sends, as print data, the divided job script received in step 1606 and the image data received in step 1609 to instruct a function control unit 405 to print the print data. The function control unit 405 prints the image data contained in the received print data according to processing described in the job script contained in the print data.

Subsequent processing in steps 1612 to 1618 is the same as that in steps 1509 to 1515 of Fig. 15 and a description thereof will be omitted.

As described above, when image data having a large size is acquired from another MFP in the same LAN, a pull print time becomes shorter as compared with a case in which image data is acquired from an external server in the Internet or the like.

### Other Example

Aspects of the present invention can also be realized by a computer of a system or apparatus (or devices such as a CPU or MPU) that reads out and executes a program recorded on a memory device to perform the functions of the above-described example (s), and by a method, the steps of which are performed by a computer of a system or apparatus by, for example, reading out and executing a program recorded on a memory device to perform the functions of the above-described example (s). For this purpose, the program is provided to the computer for example via a network or from a recording medium of various types serving as the memory device (e.g., computer-readable medium).

While the present invention has been described with reference to exemplary examples, it is to be understood that the invention is not limited to the disclosed exemplary embodiments.

## Claims

1. An image forming apparatus (120) which executes a print job provided from a server apparatus (130) to perform printing, comprising:
notification means (403) for notifying the server apparatus of information about a login user;
reception means (402) for receiving, from the server apparatus, list information about print data allowed to be selected by the login user according to the notification;
user interface means (401) for displaying, using the received list information, a list of print data allowed to be selected by the login user;
request means (403) for sending a request for print data selected from the list; and
execution means (405) for executing processing of a print job associated with the print data which has been externally received in response to the request, and transmitting to the server apparatus (130), when the processing of the print job ends, a notification that the processing has ended,
wherein
said user interface means is configured, if the received list information indicates that a print job (1000) associated with print data included in the list has been divided at the server apparatus (130) into a plurality of divided print jobs (1050) associated with the print data included in the list, to display that another image forming apparatus (110) is executing processing of the print data included in the list and that there is an unprocessed part of the divided print jobs associated with the print data included in the list, to display in the list an indication (852) of the other image forming apparatus (110) currently processing print data included in the list and to display information (853) indicating that parallel processing of a print job among the unprocessed part of the divided print jobs associated with said print data can be selected for execution by the execution means (405),
wherein said request means (403) is configured, if the print data being processed by the other image forming apparatus (110) is selected from the list, to send a request for a print job among the unprocessed part of the divided print jobs associated with the selected print data.

2. The apparatus according to claim 1, wherein using the list information, said user interface means displays identification information of the other image forming apparatus (110).

3. The apparatus according to claim 1 or 2, wherein said execution means uses an identifier of the other image forming apparatus received from the server apparatus in response to the request to receive a part of the divided print jobs associated with the selected print data from the other image forming apparatus (110).

4. The apparatus according to one of claims 1 to 3, wherein said apparatus and the server apparatus are connected with each other via the Internet.

5. A method that is performed by an image forming apparatus (120) which executes a print job provided from a server apparatus (130) to perform printing, comprising:
a notification step of notifying (S701, S1501) the server apparatus of information about a login user;
a reception step of receiving (S702, S1502), from the server apparatus, list information about print data allowed to be selected by the login user according to the notification;
a display step of displaying (S703, S1503), using the received list information, a list of print data allowed to be selected by the login user;
a request step of sending (S704, S1504) a request for print data selected from the list; and
an execution step of executing processing (S708, S1508) of a print job associated with the print data which has been externally received in response to the request, and transmitting (S709, S1509) to the server apparatus, when the processing of the print job ends, a notification that the processing has ended,
wherein
the display step includes, if the received list information indicates that a print job (1000) associated with print data included in the list has been divided at the server apparatus (130) into a plurality of divided print jobs (1050) associated with the print data included in the list, displaying that another image forming apparatus (110) is executing processing of the print data included in the list and that there is an unprocessed part of the divided print jobs associated with the print data included in the list, displaying an indication (852) of the other image forming apparatus (110) currently processing print data included in the list and displaying information (853) indicating that parallel processing of a print job among the unprocessed part of the divided print jobs associated with said print data can be selected for execution by the execution step (S708, S1508),
wherein, if the print data being processed by the other image forming apparatus (110) is selected from the list, a request for a print job among the unprocessed part of the divided print jobs associated with the selected print data is sent in the request step (S704, S1504).

6. A program for causing a computer to function as the apparatus according to any one of claims 1 to 4.

## Patentansprüche

1. Bilderzeugungsvorrichtung (120), die einen von einer Servervorrichtung (130) bereitgestellten Druckauftrag ausführt, um Drucken durchzuführen, umfassend:
eine Benachrichtigungseinrichtung (403) zum Benachrichtigen der Servervorrichtung über Information über einen Anmeldungsnutzer;
eine Empfangseinrichtung (402) zum Empfangen von Listeninformation über Druckdaten, die gemäß der Benachrichtigung durch den Anmeldungsnutzer ausgewählt werden können, von der Servervorrichtung;
eine Nutzerschnittstelleneinrichtung (401) zum Anzeigen einer Liste von Druckdaten, die durch den Anmeldungsnutzer ausgewählt werden können, unter Verwendung der empfangenen Listeninformation;
eine Anforderungseinrichtung (403) zum Senden einer Anforderung für aus der Liste ausgewählte Druckdaten; und
eine Ausführeinrichtung (405) zum Ausführen der Verarbeitung eines mit den Druckdaten verbundenen Druckauftrags, der als Reaktion auf die Anforderung extern empfangen wurde, und zum Übertragen einer Benachrichtigung über das Ende der Verarbeitung an die Servervorrichtung (130), wenn die Verarbeitung des Druckauftrags endet,
wobei die Nutzerschnittstelleneinrichtung konfiguriert ist, falls die empfangene Listeninformation angibt, dass ein mit in der Liste enthaltenen Druckdaten verbundener Druckauftrag (1000) an der Servervorrichtung (130) in mehrere aufgeteilte Druckaufträge (1050) aufgeteilt wurde, die mit den in der Liste enthaltenen Druckdaten verbunden sind, anzuzeigen, dass eine andere Bilderzeugungsvorrichtung (110) gerade Verarbeitung der in der Liste enthaltenen Druckdaten ausführt und dass ein Teil der aufgeteilten Druckaufträge, die mit den in der Liste enthaltenen Druckdaten verbunden sind, unverarbeitet ist,
in der Liste einen Hinweis (852) auf die andere Bilderzeugungsvorrichtung (110) anzuzeigen, die gerade in der Liste enthaltene Druckdaten verarbeitet, und
Information (853) anzuzeigen, die angibt, dass parallele Verarbeitung eines Druckauftrags aus dem unverarbeiteten Teil der mit den Druckdaten verbundenen aufgeteilten Druckaufträge zum Ausführen durch die Ausführungseinrichtung (405) ausgewählt werden kann,
wobei die Anforderungseinrichtung (403) konfiguriert ist, falls die Druckdaten, die gerade durch die andere Bilderzeugungsvorrichtung (110) verarbeitet werden, aus der Liste ausgewählt werden, eine Anforderung für einen Druckauftrag aus dem unverarbeiteten Teil der mit den ausgewählten Druckdaten verbundenen aufgeteilten Druckaufträge zu senden.

2. Vorrichtung nach Anspruch 1, wobei die Nutzerschnittstelleneinrichtung unter Verwendung der Listeninformation Identifikationsinformation der anderen Bilderzeugungsvorrichtung (110) anzeigt.

3. Vorrichtung nach Anspruch 1 oder 2, wobei die Ausführungseinrichtung einen Identifikator der anderen Bilderzeugungsvorrichtung verwendet, der von der Servervorrichtung als Reaktion auf die Anforderung, einen Teil der mit den ausgewählten Druckdaten verbundenen aufgeteilten Druckaufträge von der anderen Bilderzeugungsvorrichtung (110) zu empfangen, empfangen wurde.

4. Vorrichtung nach einem der Ansprüche 1 bis 3, wobei die Vorrichtung und die Servervorrichtung über das Internet miteinander verbunden sind.

5. Verfahren, das durch eine Bilderzeugungsvorrichtung (120) durchgeführt wird, welche einen von einer Servervorrichtung (130) bereitgestellten Druckauftrag ausführt, um Drucken durchzuführen, umfassend:
einen Benachrichtigungsschritt des Benachrichtigens (S701, S1501) der Servervorrichtung über Information über einen Anmeldungsnutzer;
einen Empfangsschritt des Empfangens (S702, S1502) von Listeninformation über Druckdaten, die gemäß der Benachrichtigung durch den Anmeldungsnutzer ausgewählt werden können, von der Servervorrichtung;
einen Anzeigeschritt des Anzeigens (S703, S1503) einer Liste von Druckdaten, die durch den Anmeldungsnutzer ausgewählt werden können, unter Verwendung der empfangenen Listeninformation;
einen Anforderungsschritt des Sendens (S704, S1504) einer Anforderung für aus der Liste ausgewählte Druckdaten; und
einen Ausführungsschritt des Ausführens der Verarbeitung (S708, S1508) eines mit den Druckdaten verbundenen Druckauftrags, der als Reaktion auf die Anforderung von extern empfangen wurde, und des Übertragens (S709, S1509) einer Benachrichtigung über das Ende der Verarbeitung an die Servervorrichtung, wenn die Verarbeitung des Druckauftrags endet,
wobei der Anzeigeschritt umfasst: falls die empfangene Listeninformation angibt, dass ein mit in der Liste enthaltenen Druckdaten verbundener Druckauftrag (1000) an der Servervorrichtung (130) in mehrere aufgeteilte Druckaufträge (1050) aufgeteilt wurde, die mit den in der Liste enthaltenen Druckdaten verbunden sind, Anzeigen, dass eine andere Bilderzeugungsvorrichtung (110) gerade Verarbeitung der in der Liste enthaltenen Druckdaten ausführt und dass ein Teil der aufgeteilten Druckaufträge, die mit den in der Liste enthaltenen Druckdaten verbunden sind, unverarbeitet ist,
Anzeigen eines Hinweises (852) auf die andere Bilderzeugungsvorrichtung (110), die gerade in der Liste enthaltene Druckdaten verarbeitet, und
Anzeigen von Information (853) darüber, dass parallele Verarbeitung eines Druckauftrags aus dem unverarbeiteten Teil der mit den Druckdaten verbundenen aufgeteilten Druckaufträge zur Ausführung durch den Ausführungsschritt (S708, S1508) ausgewählt werden kann,
wobei, falls die Druckdaten, die gerade durch die andere Bilderzeugungsvorrichtung (110) verarbeitet werden, aus der Liste ausgewählt werden, im Anforderungsschritt (S704, S1504) eine Anforderung für einen Druckauftrag aus dem unverarbeiteten Teil der mit den ausgewählten Druckdaten verbundenen aufgeteilten Druckaufträge gesendet wird.

6. Programm zum Veranlassen eines Computers, als die Vorrichtung nach einem der Ansprüche 1 bis 4 zu funktionieren.

## Revendications

1. Appareil de formation d'image (120) qui exécute une tâche d'impression fournie par un appareil serveur (130) afin d'effectuer une impression, comprenant :
un moyen de notification (403) pour notifier à l'appareil serveur des informations concernant un utilisateur connecté ;
un moyen de réception (402) pour recevoir, en provenance de l'appareil serveur, des informations de liste concernant des données d'impression dont la sélection par l'utilisateur connecté est autorisée conformément à la notification ;
un moyen d'interface utilisateur (401) pour afficher, à l'aide des informations de liste reçues, une liste de données d'impression dont la sélection par l'utilisateur connecté est autorisée ;
un moyen de demande (403) pour envoyer une demande de données d'impression sélectionnées dans la liste ; et
un moyen d'exécution (405) pour exécuter le traitement d'une tâche d'impression associée aux données d'impression ayant été reçues de l'extérieur en réponse à la demande, et transmettre à l'appareil serveur (130), lorsque le traitement de la tâche d'impression se termine, une notification selon laquelle le traitement s'est terminé ;
dans lequel ledit moyen d'interface utilisateur est configuré, si les informations de liste reçues indiquent qu'une tâche d'impression (1000) associée à des données d'impression contenues dans la liste a été divisée au niveau de l'appareil serveur (130) en une pluralité de tâches d'impression divisées (1050) associées aux données d'impression contenues dans la liste, pour afficher le fait qu'un autre appareil de formation d'image (110) exécute un traitement des données d'impression contenues dans la liste et qu'une partie non traitée des tâches d'impression divisées est associée aux données d'impression contenues dans la liste, pour afficher dans la liste une indication (852) du fait que l'autre appareil de formation d'image (110) est en train de traiter des données d'impression contenues dans la liste et pour afficher des informations (853) indiquant qu'un traitement en parallèle d'une tâche d'impression, parmi la partie non traitée des tâches d'impression divisées associées auxdites données d'impression, peut être sélectionné pour une exécution par le moyen d'exécution (405),
dans lequel ledit moyen de demande (403) est configuré, si les données d'impression en cours de traitement par l'autre appareil de formation d'image (110) sont sélectionnées dans la liste, pour envoyer une demande concernant une tâche d'impression parmi la partie non traitée des tâches d'impression divisées associées aux données d'impression sélectionnées.

2. Appareil selon la revendication 1, dans lequel, en utilisant les informations de liste, ledit moyen d'interface utilisateur affiche des informations d'identification de l'autre appareil de formation d'image (110) .

3. Appareil selon la revendication 1 ou 2, dans lequel ledit moyen d'exécution utilise un identifiant de l'autre appareil de formation d'image, reçu en provenance de l'appareil serveur, en réponse à la demande de réception d'une partie des tâches d'impression divisées associées aux données d'impression sélectionnées en provenance de l'autre appareil de formation d'image (110).

4. Appareil selon l'une des revendications 1 à 3, dans lequel ledit appareil et l'appareil serveur sont connectés l'un à l'autre par l'intermédiaire de l'Internet.

5. Procédé mis en oeuvre par un appareil de formation d'image (120) qui exécute une tâche d'impression fournie par un appareil serveur (130) afin d'effectuer une impression, comprenant :
une étape de notification consistant à notifier (S701, S1501) à l'appareil serveur des informations concernant un utilisateur connecté ;
une étape de réception consistant à recevoir (S702, S1502), en provenance de l'appareil serveur, des informations de la liste concernant des données d'impression dont la sélection par l'utilisateur connecté est autorisée conformément à la notification ;
une étape d'affichage consistant à afficher (S703, S1503), en utilisant les informations de liste reçues, une liste de données d'impression dont la sélection par l'utilisateur connecté est autorisée ;
une étape de demande consistant à envoyer (S704, S1504) une demande de données d'impression sélectionnées dans la liste ; et
une étape d'exécution consistant à exécuter un traitement (S708, S1508) d'une tâche d'impression associée aux données d'impression ayant été reçues de l'extérieur en réponse à la demande, et à transmettre (S709, S1509) à l'appareil serveur, lorsque le traitement de la tâche d'impression se termine, une notification selon laquelle le traitement s'est terminé,
dans lequel l'étape d'affichage consiste, si les informations de liste reçues indiquent qu'une tâche d'impression (1000) associée à des données d'impression contenues dans la liste a été divisée au niveau de l'appareil serveur (130) en une pluralité de tâches d'impression (1050) divisées associées aux données d'impression contenues dans la liste, à afficher le fait qu'un autre appareil de formation d'image (110) est en train d'exécuter un traitement des données d'impression contenues dans la liste et qu'une partie non traitée des tâches d'impression divisées est associée aux données d'impression contenues dans la liste, à afficher une indication (852) du fait que l'autre appareil de formation d'image (110) est en train de traiter des données d'impression contenues dans la liste et à afficher des informations (853) indiquant qu'un traitement en parallèle d'une tâche d'impression, parmi la partie non traitée des tâches d'impression divisées associées auxdites données d'impression, peut être sélectionné pour une exécution par l'étape d'exécution (S708, S1508),
dans lequel, si les données d'impression en cours de traitement par l'autre appareil de formation d'image (110) sont sélectionnées dans la liste, une demande d'une tâche d'impression parmi la partie non traitée des tâches d'impression divisées associées aux données d'impression sélectionnées est envoyée lors de l'étape de demande (S704, S1504) .

6. Programme destiné à amener un ordinateur à fonctionner en tant qu'appareil selon l'une quelconque des revendications 1 à 4.
